# EUROPÄISCHE PATENTSCHRIFT

(11) **EP 1 091 664 B1**
(45) Veröffentlichungstag und Bekanntmachung des Hinweises auf die Patenterteilung: **14.08.2002**
(21) Anmeldenummer: 99927824.5
(22) Anmeldetag: 01.06.1999
(51) Int. Cl.: A44B 18/00, B29C 43/22

(54) **VERFAHREN ZUR HERSTELLUNG EINES HAFTVERSCHLUSSTEILES**
METHOD FOR PRODUCING A FIXING CLOSURE ELEMENT
PROCEDE DE PRODUCTION D'UN ELEMENT DE FERMETURE PAR ACCROCHAGE PAR CONTACT

(30) Priorität: 29.06.1998 DE 19828856
(43) Veröffentlichungstag der Anmeldung: 18.04.2001
(73) Patentinhaber: Gottlieb Binder GmbH & Co., 71088 Holzgerlingen (DE)
(72) Erfinder: TUMA, Jan, D-12681 Berlin (DE)
(74) Vertreter: Bartels, Martin Erich Arthur
(86) Internationale Anmeldenummer: EP9903787
(87) Internationale Veröffentlichungsnummer: WO0000053

(56) Entgegenhaltungen:
- DE-A- 19 646 318
- DE-C- 19 730 217

## Beschreibung

Die Erfindung betrifft ein Verfahren zur Herstellung eines Haftverschlußteiles mit einer Vielzahl von einstückig mit einem Träger ausgebildeten Verhakungsmitteln in Form von endseitige Verdickungen aufweisenden Stengeln, bei dem ein formbarer Werkstoff in plastischem oder flüssigem Zustand dem Spalt zwischen einer Druckwalze und einer Formwalze zugeführt wird und diese so angetrieben werden, daß der Träger im Spalt gebildet und in einer Transportrichtung gefördert wird, bei dem als erstes formgebendes Element an der Formwalze ein durchgehende Hohlräume aufweisendes Sieb verwendet wird, in dessen Hohlräumen die Stengel der Verhakungsmittel dadurch gebildet werden, daß der formbare Werkstoff in den Hohlräumen des Siebes zumindest teilweise erhärtet, und bei dem an der Formwalze an der von der Druckwalze abgekehrten Innenseite des Siebes ein mit dessen Hohlräumen zusammenwirkendes zweites formgebendes Element verwendet wird, durch das der formbare Werkstoff im Bereich der äußeren Enden der Stengel geformt wird.

Ein Verfahren dieser Art ist bereits aus der DE 197 30 217 C1 bekannt. Dieses Verfahren ist zur Herstellung solcher Haftverschlußteile vorgesehen, bei denen die Verhakungsmittel die Form verhältnismäßig langstieliger Stengel besitzen, an denen seitlich auskragende Abstandhalter angeformt sind. Zu diesem Zweck wird bei dem bekannten Verfahren als formgebendes Element ein Sieb benutzt, das in Form einer mehrlagigen Matrize ausgebildet ist, wobei die Hohlräume der einzelnen Lagen der Matrize zur Ausformung der auskragenden Abstandhalter unterschiedliche Querschnitte aufweisen. Als zweites formgebendes Element zur Formgebung der äußeren Enden der Stengel ist die Umfangsfläche der Formwalze vorgesehen, in die Formausnehmungen eingearbeitet sind. Um das Ausformen der Verhakungsmittel aus der als formgebendes Sieb dienenden mehrlagigen Matrize zu erleichtern, ist das Matrizenmaterial als verlorene Form vorgesehen, die entfernt werden kann, was besonders einfach ist, wenn das Matrizenmaterial aus Gelatine oder dergleichen gebildet ist und anschließend recycliert wird.

Während dieses bekannte Verfahren die Herstellung von Haftverschlußteilen mit langstieligen, mit seitlichen Abstandhaltern versehener Stengel ermöglicht, ist dieses Verfahren zur Herstellung sogenannter Mikro-Haftverschlußteile ungeeignet. Die Herstellung derartiger Mikro-Haftverschlußteile ist in der DE 196 46 318 A1 als bekannt aufzeigt. Als Anwendungsmöglichkeit von in dieser Art hergestellten Haftverschlußteilen wird insbesondere die Bildung eines Haftverschlusses für Babywindeln oder für Krankenhauskleidung offenbart. Derartige Haftverschlußteile weisen eine relativ hohe Anzahl von Verhakungsmitteln pro cm² auf, was eine spezielle Ausbildung der zur Herstellung benutzten formgebenden Elemente bedingt.

Der Erfindung liegt die Aufgabe zugrunde, ein Verfahren der eingangs genannten Art aufzuzeigen, das sich insbesondere für die Herstellung von sogenannten Mikro-Haftverschlußteilen eignet.

Bei einem Verfahren der eingangs genannten Art ist diese Aufgabe erfindungsgemäß dadurch gelöst, daß als an der Innenseite des Siebes angeordnetes zweites formgebendes Element ein inneres zweites Sieb oder eine mit Vorsprüngen, welche sich in die Hohlräume des ersten Siebes erstrecken, versehene Folie verwendet wird, durch deren Vorsprünge Vertiefungen in den Enden der aus dem Kunststoff geformten Stengel erzeugt werden.

Dadurch, daß erfindungsgemäß die endseitige Gestaltung der Stengel mittels eines zweiten formgebenden Elementes in Form eines zweiten, inneren Siebes oder einer Folie erfolgt, deren Vorsprünge mit den Hohlräumen des äußeren Siebes zusammenwirken, sind an die Ausbildung des äußeren Siebes keine besonderen Anforderungen zu stellen, selbst wenn Mikro-Haftverschlußteile hergestellt werden sollen, bei denen die Verhakungsmittel in sehr hoher Packungsdichte angeordnet sind. Insbesondere ist beim erfindungsgemäßen Verfahren die Form und Beschaffenheit des endseitigen Bereiches der Stengel, die von dem durch die Öffnungen des äußeren Siebes eingefüllten Werkstoff gebildet werden, nicht von randseitigen Radien der Sieböffnungen abhängig. Es ergibt sich daher der Vorteil der einfacheren und billigeren Herstellung des jeweiligen Siebes.

Wird als an der Innenseite des einen Siebes angeordnetes zweites formgebendes Element eine mit Vorsprüngen, welche sich in die Hohlräume des Siebes erstrecken, versehene Folie vorgesehen, so werden beim Einfüllen des thermoplastischen Kunststoffes Vertiefungen in den Enden der aus dem Kunststoff geformten Stengel erzeugt. Dadurch, daß Vertiefungen in den gebildeten Stengeln ausgebildet werden, ergibt sich der Vorteil des äußerst einfachen Ausformens, ohne daß eine besondere Ausziehkraft zur Anwendung gebracht werden müßte.

Sowohl bei dem Beispiel der Bildung endseitiger Verdickungen als auch der Vorgehensweise der Ausbildung endseitiger Vertiefungen in den Stengeln läßt sich durch eine einfache mechanische Umformung, mittels eines beheizten oder unbeheizten Kalanders, d.h. ohne daß ein Schmelzvorgang stattfinden müßte, an den wie zuvor beschrieben vorbereiteten Stengelenden die bei Mikro-Haftverschlußteilen gewünschte, vorteilhafte Pilzform der endseitigen Verdickungen erreichen.

Durch Wahl der Querschnittsformen der Hohlräume der Siebe und/oder der Form der Vorsprünge an der als zweites formgebendes Element dienenden Folie lassen sich die endseitigen Verdickungen der Stengel nicht nur in Form von abgeflachten oder konkave Vertiefungen aufweisenden Pilzköpfen ausbilden, sondern auch in Form von Mehrecken oder in Sternform.

Im folgenden wird die Erfindung anhand von in der Zeichnung dargestellten Ausführungsbeispielen näher erläutert. Es zeigen:
- Fig. 1: eine stark schematisch vereinfacht und teils geschnitten gezeichnete Seitenansicht einer Vorrichtung zur Durchführung des erfindungsgemäßen Verfahrens;
- Fig. 2: eine perspektivische Darstellung zweier ineinandergeschobener Siebe mit zur Verdeutlichung in übertriebener Größe bereichsweise dargestellten, durch die Sieböffnungen gebildeten Hohlräumen;
- Fig. 3: einen schematisch vereinfachten Längsschnitt des Abschnitts einer Formwalze mit ineinandergeschobenen Sieben gemäß Fig. 2;
- Fig. 3a bis 3c: in vergrößertem Maßstab gezeichnete Querschnitte verschiedener Formen von durch die Sieböffnungen der ineinandergeschobenen Siebe gebildeten Hohlräume;
- Fig. 4: eine abgebrochen gezeichnete Schnittdarstellung eines Kalanders zur endseitigen mechanischen Verformung von an einem Kunststoffträger gebildeten Stengeln;
- Fig. 5a bis 5i: Draufsichten, die Beispiele für Querschnittsformen von Siebhohlräumen in übertriebenem Größenmaßstab zeigen, wobei mit gestrichelten Linien die Umrisse der Öffnungen des inneren Siebes dargestellt sind;
- Fig. 6: eine der Fig. 1 ähnliche Ansicht eines weiteren Ausführungsbeispieles einer Vorrichtung zur Durchführung des erfindungsgemäßen Verfahrens;
- Fig. 7: eine der Fig. 2 ähnliche Darstellung, die eine in ein äußeres Sieb eingesteckte Folie mit kegelartigen Vorsprüngen zeigt, wobei diese zur Verdeutlichung in übertrieben großem Maßstab, ebenso wie entsprechende Öffnungen des Siebes, gezeigt sind;
- Fig. 8: einen der Fig. 3 ähnlichen Schnitt eines Abschnittes einer Formwalze mit äußerem Sieb und innerer, mit Vorsprüngen versehener Folie;
- Fig. 8a bis 8c: den Fig. 3a bis 3c ähnliche Schnittdarstellungen, die Beispiele möglicher Gestaltungen der Hohlräume des äußeren Siebes zeigen;
- Fig. 9: eine der Fig. 4 ähnliche Darstellung eines Kalanders;
- Fig.10: eine stark vergrößert gezeichnete Draufsicht einer Öffnung des äußeren Siebes mit in diese eingreifendem Vorsprung der inneren Folie;
- Fig.11: eine in übertrieben großem Maßstab gezeichnete perspektivische Ansicht eines aus Kunststoff gebildeten Stengels mit pyramidenförmiger endseitiger Vertiefung;
- Fig.12a und 12b: perspektivische Ansichten von durch Kalandern bewirkten Formgebungen endseitiger Verdickungen des Stengels von Fig. 11 und
- Fig.13a bis 13f: in übertrieben großem Maßstab gezeichnete Draufsichten der Sieböffnungen des äußeren Siebes und in diese eingreifender Vorsprünge der inneren Folie.

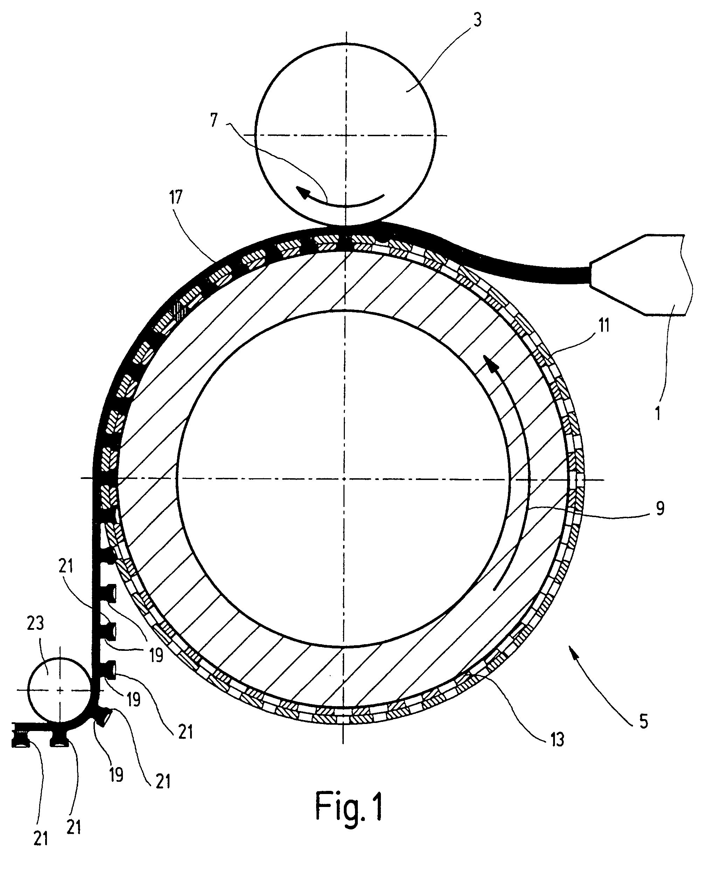

Fig. 1 zeigt in schematischer Darstellung Teile einer Vorrichtung zum Durchführen des erfindungsgemäßen Verfahrens mit einem Extruderkopf 1 als Zuführeinrichtung für in plastischem oder flüssigem Zustand befindlichen thermoplastischen Kunststoff, der als ein Band, dessen Breite derjenigen des herzustellenden Haftverschlußteiles entspricht, dem Spalt zwischen einem Druckwerkzeug und einem Formwerkzeug zugeführt wird. Als Druckwerkzeug ist eine Druckwalze 3 vorgesehen. Bei dem Formwerkzeug handelt es sich um eine als Ganzes mit 5 bezeichnete Formwalze. Beide Walzen sind in den in Fig. 1 mit Bogenpfeilen 7 und 9 angegebenen Drehrichtungen angetrieben, so daß zwischen ihnen ein Förderspalt gebildet wird, durch den das Kunststoffband in Transportrichtung gefördert wird, während gleichzeitig im Spalt das Kunststoffband zum Träger 17 des Haftverschlußteiles geformt wird und der Träger 17 an der an der Formwalze 5 anliegenden Seite durch die formgebenden Elemente der Formwalze 5 die zur Bildung von Verhakungsmitteln erforderliche Formgebung erhält.

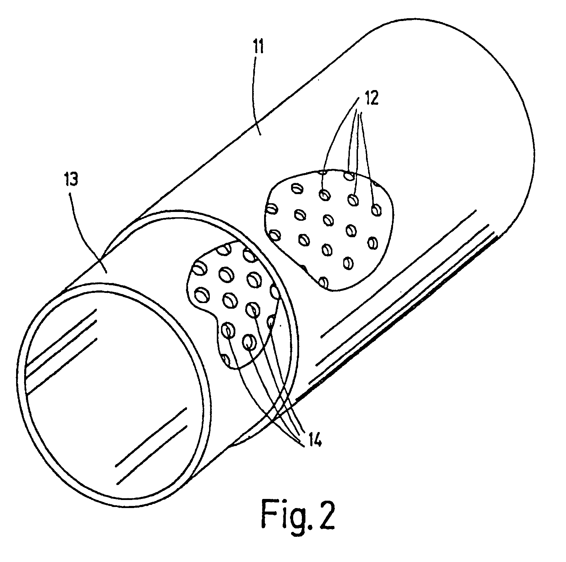

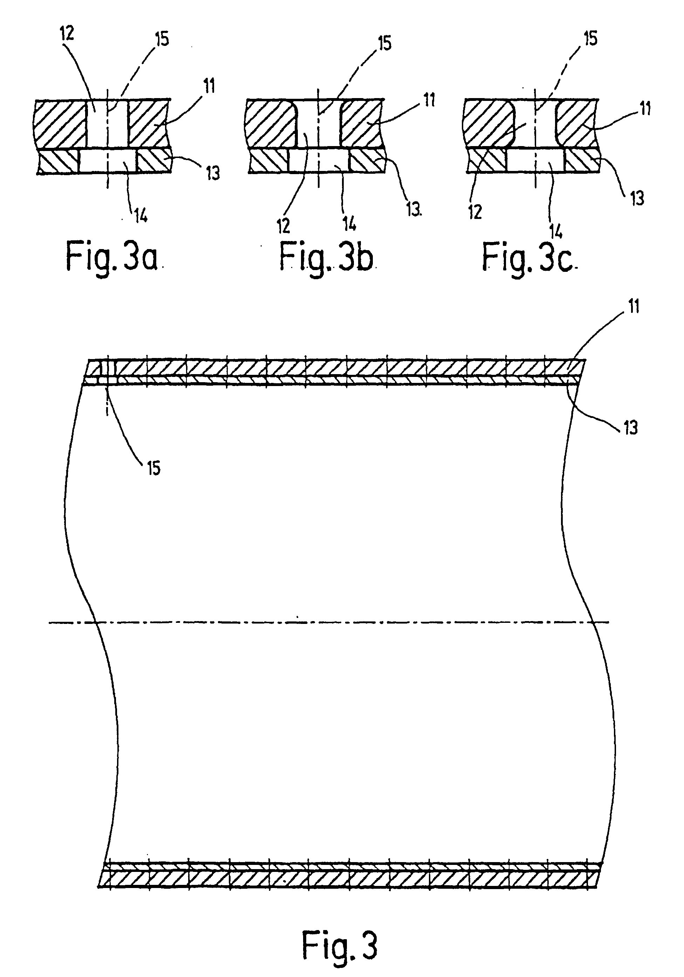

Zu diesem Zweck weist die Formwalze 5 am Umfang zwei formgebende Elemente in Form je eines Siebes auf, nämlich eines äußeren Siebes 11 und eines inneren Siebes 13, die aneinanderliegen, siehe auch Fig. 2. Wie insbesondere aus Fig. 1 und 3 zu ersehen ist, sind die Siebe 11 und 13 so ineinandergesteckt, daß die durch die Sieböffnungen von äußerem Sieb 11 und innerem Sieb 13 gebildeten Hohlräume 12 bzw. 14 mit gemeinsamer Achse 15 miteinander fluchten, siehe insbesondere Fig. 3a.

Wie letztere Figur besonders deutlich erkennen läßt, ist die Dicke des äußeren Siebes 11 größer als diejenige des inneren Siebes 13, dessen Hohlräume 14 wiederum im Querschnitt größer sind als die Hohlräume 12 des äußeren Siebes 11. Aufgrund dieser Konfiguration wird der im Spalt zwischen Druckwalze 3 und Formwalze 5 in die Hohlräume 12 und 14 eingedrückte Kunststoff so geformt, daß am Träger 17 vorspringende Stengel 19 mit verdickten Enden 21 gebildet werden. Der Unterschied der Querschnittsgrößen der Hohlräume 12 und 14 ist so gewählt, daß die Verbreiterung an den Enden 21 lediglich so groß ist, daß nach teilweisem oder vollständigem Erhärten des Kunststoffes das Ausziehen der Stengel 19 aus den Hohlräumen 12, 14 sicher erfolgen kann, wenn der Träger 17 über eine Ausziehwalze 23 von der Formwalze 5 abgeführt wird.

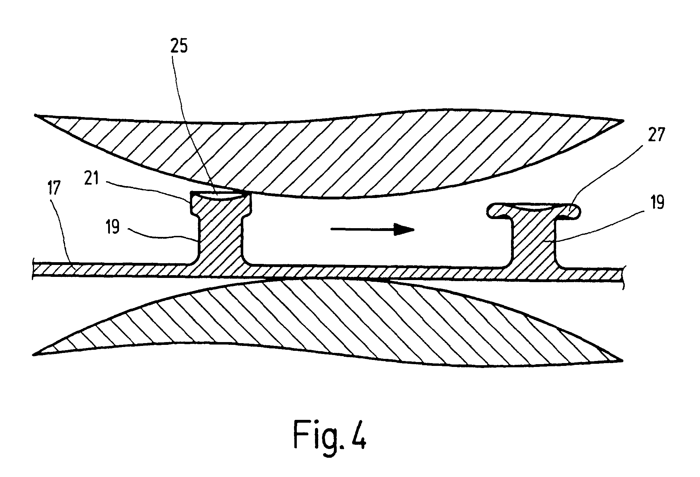

Wie insbesondere aus Fig. 4 am Beispiel des linksseitig eingezeichneten Stengels 19 zu ersehen ist, weist das freie Ende des aus den Sieben 11, 13 entformten Stengels 19 am freien Ende 21 nicht nur eine Verbreiterung auf, sondern eine kleine Vertiefung 25, die durch die in den Sieben eingeschlossene Luft entstanden ist. Durch Hindurchführen durch einen in Fig. 4 nur teilweise angedeuteten Kalander, der unbeheizt oder beheizt sein kann, lassen sich die so geformten Enden 21 der Stengel 19 zu den in Fig. 4 rechtsseitig gezeigten Verhakungsmitteln mit pilzkopfförmigen endseitigen Verdickungen 27 verformen.

Bei der Wahl der Geometrie der Stengel 19 ist darauf zu achten, daß die Dicke der Stengel 19 im Verhältnis zu ihrer Länge groß genug gewählt wird, so daß beim Kalandern nur die Enden 21 abgeflacht, nicht aber der gesamte Stengel 19 zur Seite geknickt wird.

Die Fig. 3a bis 3c zeigen, daß die Form der die Hohlräume 12 und 14 bildenden Sieböffnungen verschiedenartig gewählt sein kann, insbesondere sind, wie Fig. 3a zeigt, keine randseitigen Abrundungen erforderlich. Solche können jedoch, wie Fig. 3b und 3c zeigen, am äußeren Sieb 11 an der Außenseite oder an beiden Seiten vorgesehen sein. Auch das innere Sieb 13 könnte entsprechende Abrundungen aufweisen. Auch könnte, abweichend von den Darstellungen in den Fig. 1 und 3, die Dicke der Siebe 11 und 13 gleich groß sein. Eine genaue Positionierung der Siebe 11 und 13 relativ zueinander kann vor dem Aufziehen auf die gekühlte Formwalze 5 durch Verkleben erfolgen, beispielsweise mittels eines Zweikomponentenklebers.

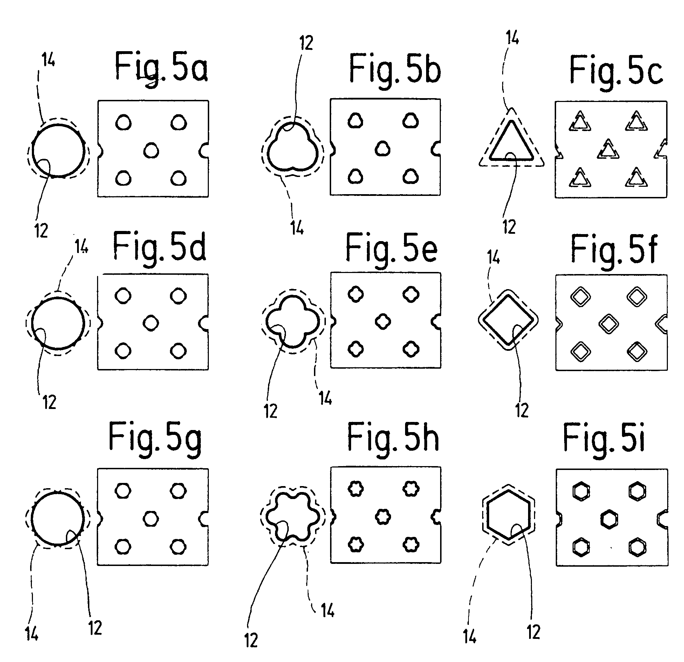

Fig. 5a bis 5i zeigen eine Anzahl möglicher Beispiele von Querschnittsformen der Sieböffnungen, wobei der Umriß der die Hohlräume 14 definierenden Öffnungen des inneren Siebes 13 mit gestrichelten Linien angedeutet und der entsprechende Umriß der Hohlräume 12 des äußeren Siebes 11 durchgezogen dargestellt sind. Bei Eindrücken des Kunststoffes in die Hohlräume, wobei alle extrudierbaren Kunststoffe verwendet werden können, welche sich in Hohlformen eindrücken lassen, ergeben sich hierbei verschiedenartig geformte Enden 21 an den Stengeln 19, die nach dem Kalandern zu Verhakungsmitteln in Form verschiedenartig geformter Verdickungen 27 führen.

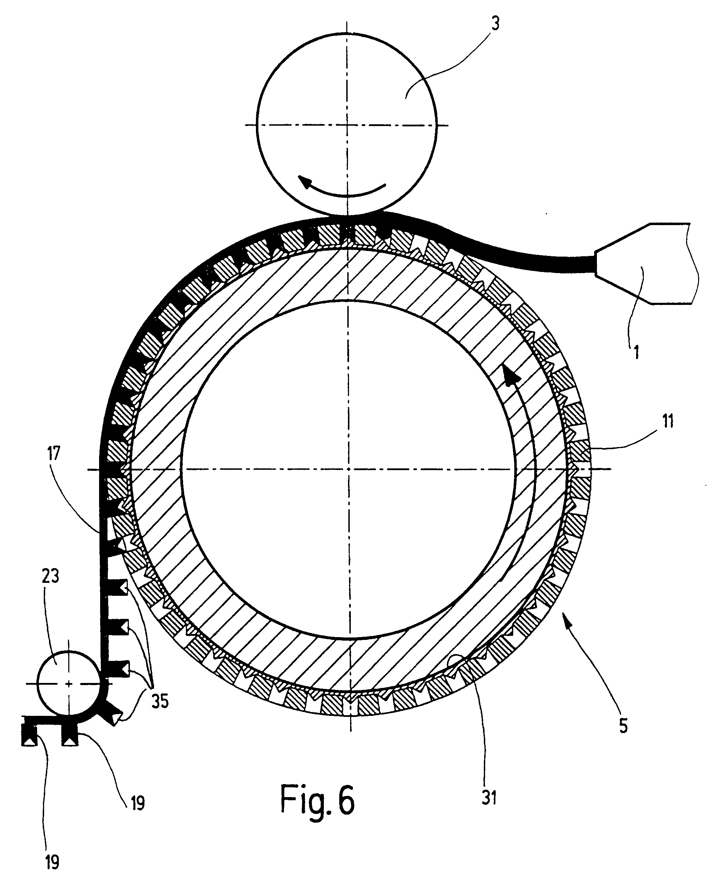

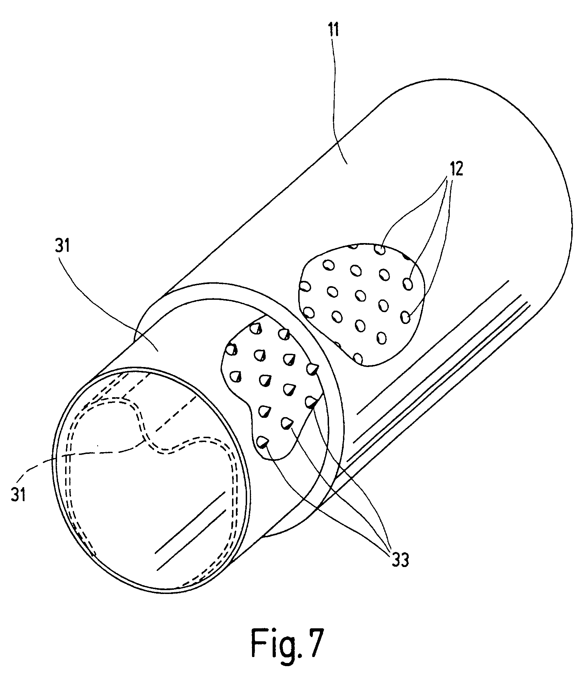

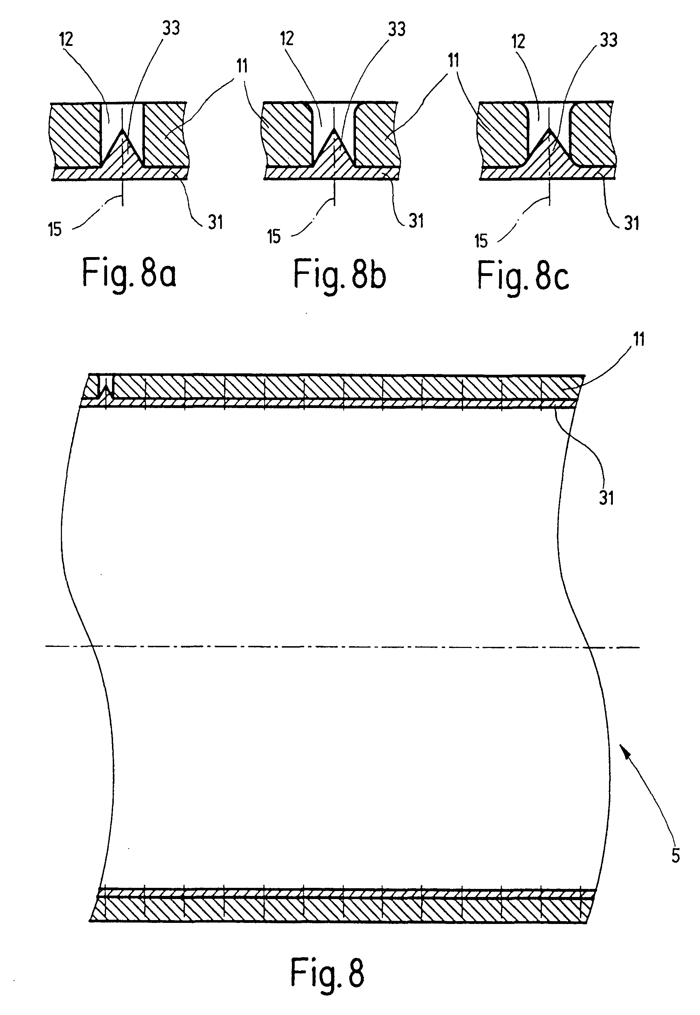

Fig. 6 zeigt ein weiteres Beispiel einer Vorrichtung zum Durchführen des Verfahrens mit einer gegenüber dem zuvor beschriebenen Beispiel abgewandelten Formwalze 5. Diese weist als zweites formgebendes Element anstelle eines inneren Siebes eine am äußeren Sieb 11 an dessen Innenseite anliegende Folie 31 mit äußeren Erhebungen in Form von Vorsprüngen 33 auf. Wie beim ersten Ausführungsbeispiel die Hohlräume 14 des inneren Siebes 13, sind beim nunmehr beschriebenen Beispiel die Vorsprünge 33, fluchtend zur Achse 15 (Fig. 8a bis 8c), auf die Hohlräume 12 des äußeren Siebes 11 ausgerichtet. Wie Fig. 7 und 8 zeigen, ist das äußere Sieb 11 aus dickerem Material, beispielsweise von einer Stärke von mehreren Zehntel Millimetern, während die innere Folie 31 wesentlich dünner, beispielsweise 0,1 mm stark sein kann. Die Vorsprünge 33, die kegel-, pyramiden- oder sternförmig sein können, lassen sich z.B. durch Ätzen erzeugen, wie dies auch bei Schneidfolien für Rotationsstanzvorrichtungen erfolgt. Dabei bilden sich Figuren mit Flankenwinkeln von ca. 60°. Auch Stachelwalzen mit einem gewebeverstärkten 3 bis 8 mm starken Gummigrund sind einsetzbar. Wegen der Erhöhungen läßt sich die innere Folie 31 nicht ohne weiteres in das äußere Sieb 11 einschieben, läßt sich jedoch, wie in Fig. 7 mit gestrichelter Linie angedeutet ist, so knicken, daß sie eingeschoben werden kann. Wenn die Folie 31 sich dann wieder in ihre runde Form aufbiegt, zentrieren die Vorsprünge 33 äußeres Sieb 11 und innere Folie 31 zueinander, indem sich die Vorsprünge 33 in die Hohlräume 12 des Siebes 11 einsetzen. Eine gegenseitige Verklebung ist daher nicht unbedingt erforderlich.

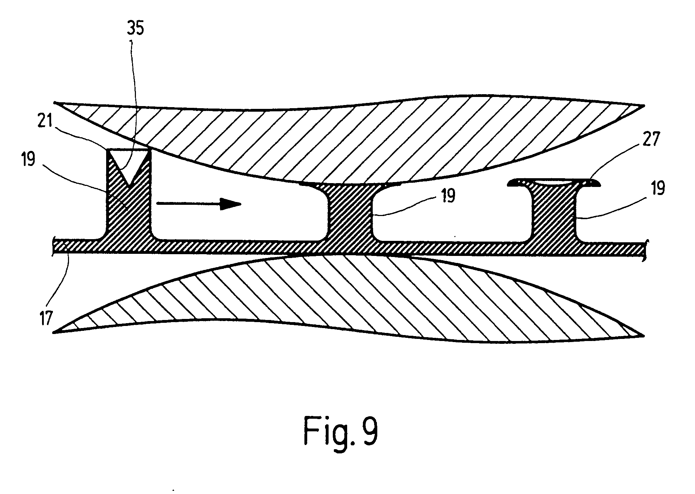

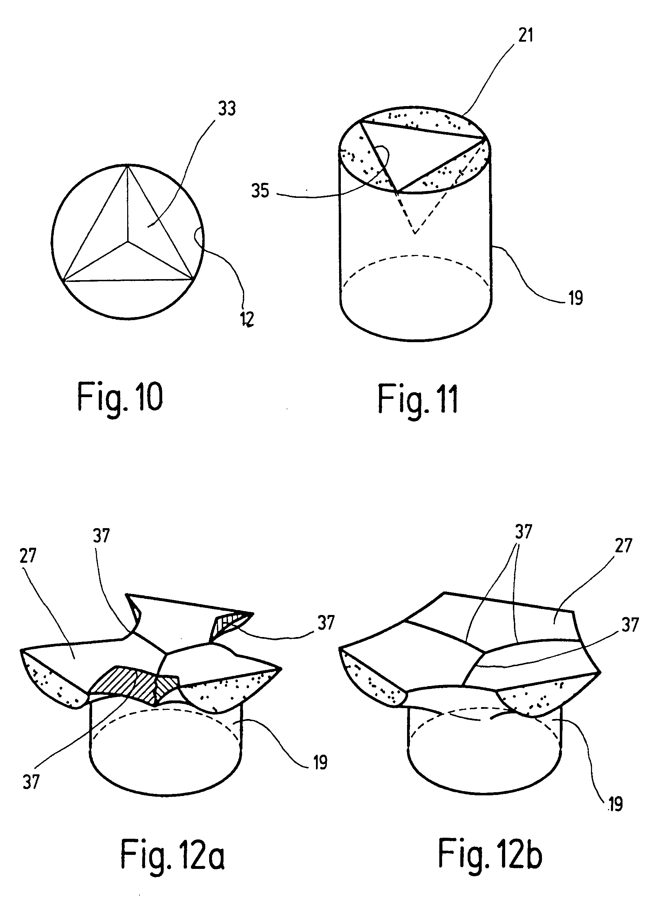

Wie Fig. 8a bis 8c zeigen, können die Ränder der Hohlräume 12 des äußeren Siebes 11 glatt oder abgerundet sein. Durch Einwirkung der Vorsprünge 33 bilden sich an den Enden 21 der Stengel 19 ausgeprägte Vertiefungen 35, siehe linke Seite der Fig. 9 oder Fig. 11. Da die Enden 21 beim Formvorgang der Stengel 19 keinerlei Verbreiterung erfahren, läßt sich der Träger 17 mit den Stengeln 19 sehr leicht von der Formwalze 5 abheben. Beim Kalandern, das durchgeführt wird, wie zuvor unter Bezugnahme auf Fig. 4 beschrieben wurde, ergeben sich aufgrund der endseitigen Vertiefungen 35 endseitige Verdickungen 27 als Verhakungsmittel, die, abhängig von den Formgebungen des Querschnittes der Hohlräume 12 des Siebes 11 und der Form der Vorsprünge 33, pilzkopfartig, sternförmig oder dergleichen sein können.

Fig. 10 und 11 verdeutlichen die Bildung einer pyramidenförmigen Vertiefung 35 durch einen pyramidenförmig geformten Vorsprung 33. Nach dem Kalandern führt diese Pyramidenform der Vertiefung 35 je nach verwendetem Kunststoffmaterial zu einer Form der endseitigen Verdickung 27, wie sie in Fig. 12a dargestellt ist, oder zu der in Fig. 12b gezeigten Form der endseitigen Verdickung 27. Wenn es sich um einen Kunststoff handelt, der beim Kalandern an den Pyramidenkanten 37 einreißt, kommt es zu der in Fig. 12a gezeigten Kopfform, andernfalls ergibt sich die in Fig. 12b gezeigte Form.

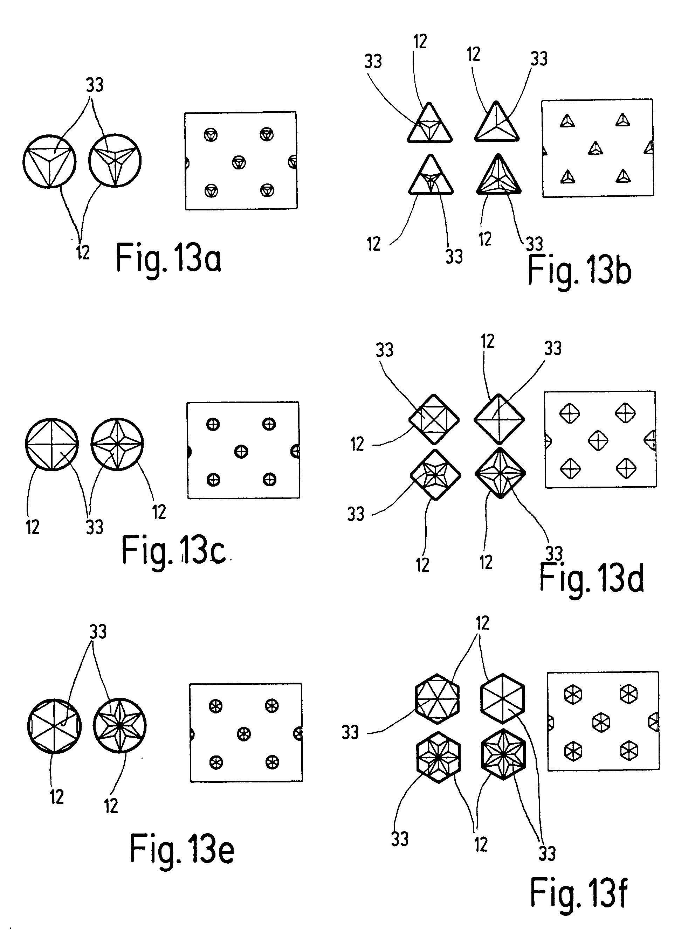

Fig. 13a bis 13f zeigen einige Beispiele möglicher Formgebungen der Hohlräume 12 des äußeren Siebes 11 und der in die Hohlräume eingreifenden Vorsprünge 33. Es versteht sich, daß auch andere geometrische Formen gewählt werden können. Als formbare Werkstoffe kommen für die Durchführung des erfindungsgemäßen Verfahrens auch biologisch abbaubare Werkstoffe (BAW) in Frage. BAW können auf Basis nachwachsender oder petrochemischer Rohstoffe oder aus Kombinationen beider hergestellt werden.

## Patentansprüche

1. Verfahren zur Herstellung eines Haftverschlußteiles mit einer Vielzahl von einstückig mit einem Träger (17) ausgebildeten Verhakungsmitteln in Form von endseitige Verdickungen (21) aufweisenden Stengeln (19), bei dem ein formbarer Werkstoff in plastischem oder flüssigem Zustand dem Spalt zwischen einer Druckwalze (3) und einer Formwalze (5) zugeführt wird und diese so angetrieben werden, daß der Träger (17) im Spalt gebildet und in einer Transportrichtung gefördert wird, bei dem als erstes formgebendes Element an der Formwalze (5) ein durchgehende Hohlräume (12) aufweisendes Sieb (11) verwendet wird, in dessen Hohlräumen die Stengel der Verhakungsmittel dadurch gebildet werden, daß der formbare Werkstoff in den Hohlräumen des Siebes (11) zumindest teilweise erhärtet, und bei dem an der Formwalze (5) an der von der Druckwalze (3) abgekehrten Innenseite des Siebes (11) ein mit dessen Hohlräumen (12) zusammenwirkendes zweites formgebendes Element (13; 31) verwendet wird, durch das der formbare Werkstoff im Bereich der äußeren Enden (21) der Stengel (19) geformt wird, **dadurch gekennzeichnet, daß** als an der Innenseite des Siebes (11) angeordnetes zweites formgebendes Element ein inneres zweites Sieb (13) oder eine mit Vorsprüngen (33), welche sich in die Hohlräume (13) des ersten Siebes (11) erstrecken, versehene Folie (31) verwendet wird, durch deren Vorsprünge (33) Vertiefungen (35) in den Enden (21) der aus dem Kunststoff geformten Stengel (19) erzeugt werden.

2. Verfahren nach Anspruch 1, **dadurch gekennzeichnet, daß** als formbarer Werkstoff ein thermoplastischer Kunststoff verwendet wird.

3. Verfahren nach Anspruch 1 oder 2, **dadurch gekennzeichnet, daß** die Formwalze (5) temperiert wird.

4. Verfahren nach einem der Ansprüche 1 bis 3, **dadurch gekennzeichnet, daß** ein inneres Sieb (13) mit gegenüber dem äußeren ersten Sieb (11) vergrößerten Sieböffnungen (14) verwendet wird.

5. Verfahren nach Anspruch 4, **dadurch gekennzeichnet, daß** Siebe (11, 13) mit Sieböffnungen (12, 14) unterschiedlicher und/oder von der Kreisform abweichender Querschnittsform verwendet werden.

6. Verfahren nach einem der Ansprüche 1 bis 5, **dadurch gekennzeichnet, daß** Siebe (11, 13) unterschiedlicher Dicke verwendet werden, vorzugsweise ein inneres Sieb (13) mit einer gegenüber dem äußeren Sieb (11) verringerten Dicke verwendet wird.

7. Verfahren nach Anspruch 1, **dadurch gekennzeichnet, daß** durch entsprechende Formgebung der Vorsprünge (33) der Folie (31) Vertiefungen (35) in Kegelform, Pyramidenform oder Sternform in den Enden der Stengel erzeugt werden.

8. Verfahren nach einem der Ansprüche 1 bis 7, **dadurch gekennzeichnet, daß** nach dem Entformen der mittels der formgebenden Elemente gebildeten Stengel (19) deren Enden durch Kalandern zur Bildung der endseitigen Verdickungen (27) verformt werden.

9. Verfahren nach einem der Ansprüche 1 bis 8, **dadurch gekennzeichnet, daß** als thermoplastischer Kunststoff Polyolefine oder Blends von Polyamiden verwendet werden.

## Claims

1. Method for producing a fastening closure part having a large number of hooking means which are formed in one piece with a carrier (17) and which are in the form of stems (19) having terminal thickenings (21), in which method a mouldable material is conveyed in the plastic or liquid state to the nip between a pressure roller (3) and a shaping roller (5) which are so driven that the carrier (17) is formed in the nip and is conveyed in a transport direction, in which method a screen (11) which has through-cavities (12) in which the stems of the hooking means are formed as a result of the at least partial hardening of the mouldable material in the cavities of the screen (11) is used as the first shaping element on the shaping roller (5), and in which method a second shaping element (13; 31) which cooperates with the cavities (12) of the screen (11) and by which the mouldable material is moulded in the region of the outer ends (21) of the stems (19) is used on the shaping roller (5), on the inner side of the screen (11) remote from the pressure roller (3), **characterised in that** an inner second screen (13) or a film (31) provided with projections (33) which extend into the cavities (12) of the first screen (11) and which produce depressions (35) in the ends (21) of the stems (19) moulded from the plastics material is used as the second shaping element arranged on the inner side of the screen (11).

2. Method according to claim 1, **characterised in that** a thermoplastic plastics material is used as the mouldable material.

3. Method according to claim 1 or 2, **characterised in that** the shaping roller (5) is tempered.

4. Method according to any one of claims 1 to 3, **characterised in that** an inner screen (13) having screen openings (14) which are enlarged compared with the outer first screen (11) is used.

5. Method according to claim 4, **characterised in that** screens (11, 13) with screen openings (12, 14) having different cross-sectional shapes and/or having a cross-sectional shape other than a circular shape are used.

6. Method according to any one of claims 1 to 5, **characterised in that** screens (11, 13) of differing thickness are used, preferably an inner screen (13) having a thickness which is reduced compared with the outer screen (11).

7. Method according to claim 1, **characterised in that**, by appropriate shaping of the projections (33) of the film (31), depressions (35) are produced in a conical shape, a pyramid shape or a star shape in the ends of the stems.

8. Method according to any one of claims 1 to 7, **characterised in that**, after the stems (19) formed by the shaping elements have been removed from the mould, their ends are deformed by calendering in order to form the terminal thickenings (27).

9. Method according to any one of claims 1 to 8, **characterised in that** polyolefins or blends of polyamides are used as the thermoplastic plastics material.

## Revendications

1. Procédé de fabrication d'une pièce de fermeture par accrochage comprenant une pluralité de moyens d'accrochage formés d'une seule pièce avec un support (17) et conçus sous forme de tiges (19) avec des renflements (21) aux extrémités, dans lequel un matériau ductile est acheminé à l'état plastique ou liquide vers la fente entre un rouleau de pression (3) et un cylindre de formage (5) et ceux-ci sont actionnés de telle sorte que le support (17) est formé dans la fente et est transporté dans un sens de transport, dans lequel le premier élément de formage utilisé sur le cylindre de formage (5) est un crible (11) muni de cavités (12) débouchantes, dans lesquelles sont formées les tiges des moyens d'accrochage, par le fait que le matériau ductile durcit au moins en partie dans les cavités du crible (11), et dans lequel il est prévu sur le cylindre de formage (5), sur la face intérieure du crible (11) opposée au rouleau de pression (3), un deuxième élément de formage (13 ; 31), qui coopère avec les cavités (12) dudit crible et par lequel le matériau ductile est formé dans la zone des extrémités extérieures (21) des tiges (19), **caractérisé en ce que** le deuxième élément de formage disposé sur la face intérieure du crible (11) est formé par un deuxième crible (13) intérieur ou par une feuille (31) munie de saillies (33) qui pénètrent dans les cavités (12) du premier crible (11), lesquelles saillies (33) forment des creux (35) dans les extrémités (21) des tiges (19) réalisées dans la matière plastique.

2. Procédé selon la revendication 1, **caractérisé en ce que** le matériau ductile est une matière thermoplastique.

3. Procédé selon la revendication 1 ou 2, **caractérisé en ce que** le cylindre de formage (5) est tempéré.

4. Procédé selon l'une des revendications 1 à 3, **caractérisé en ce que** l'on utilise un crible intérieur (13) avec des orifices (14) plus grands que ceux du premier crible extérieur (11).

5. Procédé selon la revendication 4, **caractérisé en ce que** l'on utilise des cribles (11, 13) avec des orifices (12, 14) présentant différentes formes de section et/ou une forme de section s'écartant de la forme circulaire.

6. Procédé selon l'une des revendications 1 à 5, **caractérisé en ce que** l'on utilise des cribles (11, 13) d'épaisseur différente, de préférence un crible intérieur (13) avec une épaisseur inférieure à celle du crible extérieur (11).

7. Procédé selon la revendication 1, **caractérisé en ce que**, par un formage correspondant des saillies (33) de la feuille (31), les creux (35) sont réalisés sur les extrémités des tiges en forme de cône, de pyramide ou d'étoile.

8. Procédé selon l'une des revendications 1 à 7, **caractérisé en ce qu'**à l'issue du démoulage des tiges (19) formées par les éléments de formage, les extrémités desdites tiges sont déformées par calandrage pour former les renflements (27) sur les extrémités.

9. Procédé selon l'une des revendications 1 à 8, **caractérisé en ce que** les matières thermoplastiques utilisées sont des polyoléfines ou des combinaisons (blends) de polyamides.
